# EUROPÄISCHE PATENTSCHRIFT

(11) **EP 0 977 714 B1**
(45) Veröffentlichungstag und Bekanntmachung des Hinweises auf die Patenterteilung: **23.01.2002**
(21) Anmeldenummer: 98919255.4
(22) Anmeldetag: 11.04.1998
(51) Int. Cl.: C03C 3/06, C03C 13/04, G02B 6/10

(54) **GLAS MIT KÜNSTLICHER ISOTOPENVERTEILUNG FÜR LICHTWELLENLEITER**
GLASS WITH ARTIFICIAL ISOTOPE RATIO FOR OPTICAL WAVE GUIDES
VERRE A RAPPORT ISOTOPIQUE ARTIFICIEL POUR GUIDES D'ONDES LUMINEUSES

(30) Priorität: 22.04.1997 DE 19716869
(43) Veröffentlichungstag der Anmeldung: 09.02.2000
(73) Patentinhaber: Deutsche Telekom AG, 53113 Bonn (DE)
(72) Erfinder: HEITMANN, Walter, D-64401 Gro -Bieberau (DE); KLEIN, Karl-Friedrich, D-61169 Friedberg (DE)
(86) Internationale Anmeldenummer: EP9802119
(87) Internationale Veröffentlichungsnummer: WO9847829

(56) Entgegenhaltungen:
- PATENT ABSTRACTS OF JAPAN vol. 009, no. 233 (C-304), 19.September 1985 & JP 60 090845 A (FURUKAWA DENKI KOGYO KK;OTHERS: 01), 22.Mai 1985,
- HOSONO H ET AL: JOURNAL OF NON-CRYSTALLINE SOLIDS, Bd. 179, 1994, Seite 39-50 XP004067796
- GRISCOM D L ET AL: JOURNAL OF NON-CRYSTALLINE SOLIDS, Bd. 182, Nr. 1-2, März 1995, Seite 119-134 XP004068031
- CHEMICAL ABSTRACTS, vol. 81, no. 8, 26.August 1974 Columbus, Ohio, US; abstract no. 44002, SILINS, A. ET AL: XP002074860 & MATER. SOVESHCH. LYUMIN. (KRISTALLOFOSFORY), 21ST MEETING, 1973, VSES. NAUCH.-ISSLED. INST. LYUMINOFOROV OSOBO CHIST. VESHCHESTV, STAVROPOL, USSR, Seite 192
- LINES M E ET AL: JOURNAL OF NON-CRYSTALLINE SOLIDS, AMSTERDAM, NL, Bd. 107, Nr. 2/03 + INDEX, Januar 1989, Seiten 251-260, XP000003525 in der Anmeldung erwähnt
- RUF T. ET AL: PHYSIKALISCHE BLÄTTER., Bd. 52, Nr. 11, 1996, WEINHEIM DE, Seiten 1115-1120, XP002074859 in der Anmeldung erwähnt
- TANAKA G. ET AL: SUMITOMO ELECTRIC TECHNICAL REVIEW, Bd. 26, 1987, OSAKA JP, Seiten 43-53, XP002074953 in der Anmeldung erwähnt

## Beschreibung

Die Erfindung betrifft Glas für Lichtwellenleiter oder dergleichen nach dem Oberbegriff des Patentanspruchs 1.

Lichtwellenleiter sind grundsätzlich bekannt und werden im wachsenden Umfang als Übertragungsleitungen in Telekommunikationsnetzen eingesetzt. Auch in der Medizin, der Sensortechnik und zur Übertragung hoher Lichtleistungen für die Materialbearbeitung finden Lichtwellenleiter zunehmend Anwendung. Für die Nachrichtenübertragung werden überwiegend Einmodenfasern aus Quarzglas mit einem Kern von etwa 10 µm Durchmesser und einem Mantel mit geringerer Brechzahl und einem Durchmesser von 125 µm verwendet. Bekannte Lichtwellenleiter bestehen aus Quarzglas und zeichnen sich durch große Übertragungskapazität und geringe Dämpfung aus. Im Dämpfungsminimum bei einer Wellenlänge von 1,57 µm werden Werte von ca. 0,20 dB/km erreicht. 1986 ist von der japanischen Firma Sumitomo in der Veröffentlichung von G. Tanaka et al.: Characteristics of Pure Silica Core Single Mode Optical Fiber, Sumitomo Electric Technical Review 26(1987)43, ein Bestwert veröffentlicht worden, der 0,15 dB/km beträgt.

In Patent Abstracts of Japan; JP-A-60090845 ist eine Gasspülung mit Helium und Deuterium bei der Verglasung von porösem SiO₂ (Quarzglas) und GeO₂-dotiertem Quarzglas beschrieben. Das Helium verringert die Strukturdefekte im Quarzglas bei diesem Prozeß und entweicht danach vollständig. Deuterium ist ein Wasserstoffisotop und verdrängt Wasserstoffatome aus dem Material, so daß sich in der Vorform statt OH-Gruppen OD-Gruppen bilden. OH-Gruppen, die sich als Verunreinigung in Konzentrationen von unter 0,0001% im Quarzglas befinden können, verursachen Absorptionsbanden im infraroten Wellenlängenbereich. Wenn man Wasserstoff durch Deuterium ersetzt, verschieben sich die Absorptionsbanden zu längeren Wellenlängen. Dadurch sind Bereiche, die zum Beispiel für die optische Nachrichtenübertragung wichtig sind und durch die OH-Absorption Zusatzverluste aufweisen, dann frei von zusätzlicher Absorption. Diese Technik ist aufwendig und hat sich in der Praxis nicht durchgesetzt, weil die Faserhersteller inzwischen die OH-Konzentrationen im Quarzglas soweit reduzieren, daß die OH-Absorption praktisch keine Rolle mehr spielt.

Außerdem ist in Database, Chemical Abstracts; Accession no. 81:44002 ein mit ²⁹Si dotiertes Quarzglas grundsätzlich bekannt.

Die Dämpfung α von Einmodenfasern oberhalb einer Wellenlänge von 1 µm setzt sich aus drei Komponenten zusammen. Dies ist die Streuung αₛ, die OH-Absorption α_{OH} und die Infrarotabsorption α_{IR}. Die OH-Absorption ist bedingt durch den Einbau einer geringen Konzentration von OH-Ionen in das Quarzglas. Sie ist sehr stark von der Wellenlänge abhängig und zeigt sich in der spektralen Dämpfungskurve durch eine Absorptionsbande bei etwa 1,4 µm. In dem für optische Nachrichtentechnik wichtigen Wellenbereich zwischen 1,5 und 1,7 µm wird die Dämpfung praktisch nur durch die Streuverluste und die Infrarotabsorption bestimmt. Die Streuverluste sind im wesentlichen durch Rayleigh-Streuung bedingt und verringern sich mit zunehmender Wellenlänge λ mit 1/λ⁴. Die Infrarotabsorption setzt bei etwa 1,5 µm ein und steigt mit zunehmender Wellenlänge steil an. Das Dämpfungsminimum liegt bei 1,57 µm, weil dort die Abnahme der Streuverluste und die Zunahme der Infrarotabsorption gleich groß sind.

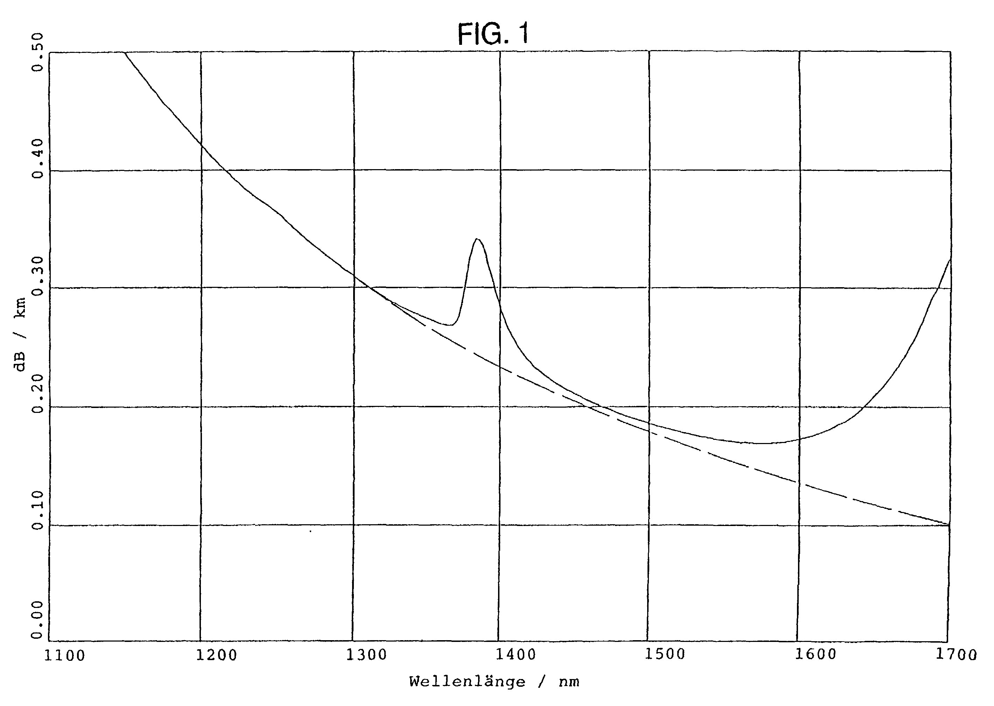

Die Fig. 1 zeigt den geschilderten Sachverhalt anhand der spektralen Dämpfungskurve einer Einmodenfaser für den Wellenlängenbereich zwischen 1,1 und 1,7 µm. Die OH-Absorptionsbande bei 1,4 µm ist deutlich erkennbar. Im Minimum bei 1,57 µm weist diese Faser eine Dämpfung von 0,17 dB/km auf. Der Verlauf der Streuverluste ohne OH- und Infrarotabsorption ist gestrichelt eingezeichnet. Für die Wellenlängen oberhalb von 1,5 µm spielt die OH-Absorption praktisch keine Rolle. Ab etwa 1,6 µm steigt dann die Infrarotabsorption steil an. Wie aus der Veröffentlichung von M.E. Lines et al.: "Calcium Aluminate Glasses As Potential Ultralow-Loss Optical Materials At 1,5 - 1,9 µm", Journal of Non-Crystalline Solids 107(1989)251, hervorgeht, wird die Infrarotabsorption nach der Formel α_{IR}=A·e^{-a/λ} berechnet. Dabei wird für Quarzglas A = 6·10¹¹ dB/km und a = 48 µm angegeben. Daraus errechnet sich für 1,55 µm bzw. 1,7 µm eine Infrarotabsorption von 0,02 dB/km bzw. 0,33 dB/km. Die Infrarotabsorption in Gläsern wird durch die Ausläufer extrem starker Schwingungsbanden (Phononen) im langwelligen Infrarotbereich verursacht, wie aus der Veröffentlichung von S. Kobayashi et al.: "Characteristics of Optical Fibers in Infrared Wavelength Region", Review of Electrical Communications Laboratories 26,3-4(1978)453, hervorgeht. Die dominierende Absorptionsbande von reinem Quarzglas liegt bei 9,1 µm und weist im Maximum eine Dämpfung von 10¹⁰ dB/km auf. Die spektrale Lage und Breite der Absorptionsbande wird durch die Massen der beteiligten Atome, also im Fall von Quarzglas durch die Massen von Silizium und Sauerstoff bestimmt. Die physikalischen Grundlagen hierfür sind ausführlich in der Veröffentlichung von T. Ruf et. al.: "Von Federn und Massen: Physik isotopenreiner Halbleiter", Physikalische Blätter 52,11(1996)1115, dargestellt. Für reines und dotiertes Quarzglas, das bisher für die Herstellung von Lichtwellenleitern eingesetzt wird, benutzt man natürliche Isotopengemische der beteiligten Elemente, das heißt für reines Quarzglas Silizium und Sauerstoff. Als Dotierstoffe werden hauptsächlich Germanium und Fluor verwendet.

Der Erfindung liegt die Aufgabe zugrunde, Glas mit verringerter Infrarotabsorption zu schaffen, das sich insbesondere für Lichtwellenleiter mit deutlich reduziertem minimalen Dämpfungskoeffizienten und für eine effektive Herstellung eignet.

Die erfindungsgemäße Lösung ist in den Kennzeichen der Patentansprüche 1 und 2 charakterisiert.

Weitere Ausgestaltungen der Erfindung bzw. Lösungen ergeben sich aus den Kennzeichen der Patentansprüche 3 bis 10.

Dadurch, daß das Glas aus Atomen mit Massenzahlen aufgebaut ist, die größer sind als die Massenzahlen der natürlichen Isotopenverteilung ergibt sich durch die erhöhten Massenzahlen (Atommassen) eine Verschiebung der Absorptionsbanden zu längeren Wellenlängen und eine Verringerung der Linienbreite. Durch diese beiden Effekte wird erreicht, daß sich der Einsatz der Infrarotabsorption zu längeren Wellenlängen verschiebt, so daß sich ein wesentlich breiteres Anwendungsspektrum von Lichtwellenleitern oder dergleichen, hergestellt aus derartig aufgebauten Gläsern, ergibt. Die Kosten für Lichtwellenleiter machen besonders bei den aufwendig hergestellten Seekabeln nur einen kleinen Teil der Gesamtkosten aus. Durch die geringere Dämpfung der erfindungsgemäßen Lichtwellenleiter können somit Repeater bzw. Verstärker eingespart oder völlig vermieden werden, wodurch sich in vielen Fällen trotz erhöhter Faserkosten beim Aufbau von Seekabelstrecken oder bei Fernkabeln über Land insgesamt erhebliche Kosteneinsparungen bei erhöhter Übertragungsqualität ergeben.

Die Erfindung wird anhand von Ausführungsbeispielen im folgenden näher beschrieben.

In Fig. 1 ist eine spektrale Dämpfungskurve einer Einmodenfaser für den Wellenbereich zwischen 1,1 und 1,7 µm gezeigt, die bereits in der Einleitung diskutiert wurde.

Zunächst wird eine Tabelle gezeigt, in der die stabilen Isotope von Silizium und Sauerstoff nach Angaben aus dem physikalischen Taschenbuch, 5. Auflage, 1976, Viehweg Verlag Braunschweig, Herausgeber H. Ebert, zusammengestellt sind.

**Tabelle**

| Sauerstoff: 0 | | Fluor: F | | Silizium: Si | | Germanium: Ge | |
|---|---|---|---|---|---|---|---|
| Massenzahl/ Häufigkeit % | | Massenzahl/ Häufigkeit % | | Massenzahl/ Häufigkeit % | | Massenzahl/ Häufigkeit % | |
| 16 | 99,76 | 19 | 100 | 28 | 92,2 | 70 | 20,5 |
| 17 | 0,037 | | | 29 | 4,7 | 72 | 27,4 |
| 18 | 0,204 | | | 30 | 3,1 | 73 | 7,7 |
| | | | | | | 74 | 36,5 |
| | | | | | | 76 | 7,8 |

Bei den bisher produzierten Quarzgläsern für Lichtwellenleiter wurden natürliche Isotopengemische eingesetzt. Für reines Quarzglas nach der Tabelle ein Isotopengemisch, das im wesentlichen von ²⁸Si und ¹⁶O besteht. Die der vorliegenden Erfindung zugrundeliegende prinzipielle Idee besteht darin, das natürliche Isotopengemisch bzw. die leichten Isotope ganz oder teilweise durch schwere Isotope zu ersetzen, das heißt SiO₂ aus ³⁰Si und ¹⁶O oder aus ³⁰Si und ¹⁸O oder aus ²⁸Si und ¹⁸O aufzubauen. Die Summe der erhöhten Massenzahlen (Atommassen) bewirken eine Verschiebung der Absorptionsbanden zu längeren Wellenlängen und eine Verringerung der Linienbreite. Durch beide Effekte wird erreicht, daß sich der Einsatz der Infrarotabsorption zu längeren Wellenlängen verschiebt. Die Verschiebung der spektralen Lage der Absorptionsbanden ist nach der Veröffentlichung von T. Ruf et al.: Von Federn und Massen: "Physik isotopenreiner Halbleiter", Physikalische Blätter 52,11(1996)1115, proportional zu 1/√M (M ist die Massenzahl) und die Breite der Absorptionsbande ist proportional zu 1/M. Wenn ²⁸Si durch ³⁰Si ersetzt wird, ergibt das für die Bande bei 9,1 µm eine Verschiebung nach 9,25 µm, was einer Differenz von 0,15 µm entspricht. Die Verringerung der Breite der Absorptionsbande hat grundsätzlich auf den Einsatz der Infrarotabsorption im kurzwelligen Spektralbereich also auch im Dämpfungsminimum, den doppelten Effekt, so daß für einen Lichtwellenleiter, der aus ³⁰Si und ¹⁶O aufgebaut ist, eine merkliche Infrarotabsorption statt bei 1,5 µm erst bei 1,95 µm einsetzt. Damit verschiebt sich das Dämpfungsminimum nach 1,95 µm. Mit den bisher realisierten Werten für Streuverluste in Quarzlichtwellenleitern wird dann ein Dämpfungskoeffizient von weniger als 0,1 dB/km erreicht.

Wenn man ein Quarzglas aus ³⁰Si ¹⁸O aufbaut, verschiebt sich der Einsatz der Infrarotabsorption um ca. 1,35 µm, das heißt das Dämpfungsminimum verschiebt sich dann nach 2,85 µm, wodurch ein Dämpfungskoeffizient von unter 0,05 dB/km erreicht wird.

Lichtwellenleiter mit Dämpfungskoeffizienten unter 0,1 bzw. 0,05 dB/km eröffnen besonders für Seekabel neue Möglichkeiten. Bisher müssen nämlich Seekabel in vorgegebenen Abständen mit Repeatern oder optischen Verstärkern ausgerüstet werden, die zur Energieversorgung elektrische Fernspeisung erfordern und damit hohe Kosten verursachen. Für den küstennahen Bereich sind repeater-bzw. verstärkerfreie Kabel entwickelt worden, die bei einer Faserdämpfung von 0,2 dB/km maximal 500 km überbrücken können. Wenn Lichtwellenleiter mit weniger als 0,1 dB/km durch die Anwendung des erfindungsgemäßen Glases zur Verfügung stehen, können nunmehr mit solchen Seekabeln sämtliche Kontinente ohne den Einsatz von Verstärkern bzw. Repeatern verbunden werden.

Die Kosten für die Herstellung von Gläsern aus reinen Isotopen oder aus Isotopengemischen, deren Verteilung sich von der natürlichen unterscheidet, sind zwar hoch, spielen aber beim praktischen Einsatz der vorgeschlagenen Lösung aus folgenden Gründen keine entscheidende Rolle.

Die Lichtwellenleiter bzw. deren Vorformen, können nach einem sogenannten Überfangverfahren produziert werden, das heute schon praktisch eingesetzt wird. Dabei wird nur die innere Vorform, das heißt der Kern und ein kernnaher Bereich nach dem üblichen Verfahren hergestellt. Auf diese innere Vorform wird ein dickwandiges Rohr aus reinem Quarzglas (Überfangrohr) aufgeschmolzen, dessen Herstellungskosten bezogen auf die gleiche Menge wesentlich niedriger liegen als die für die innere Vorform.

Der Materialanteil der inneren Vorform kann bis auf etwa 5% des Gesamtvolumens abgesenkt werden, ohne daß bei den aus diesen Vorformen hergestellten Fasern Dämpfungserhöhungen auftreten. Daraus ergibt sich, daß nur 5% des Fasermaterials aus Glas mit veränderter Isotopenzusammensetzung hergestellt werden muß. Das entspricht für einen Kilometer Einmodenfaser einer Masse von weniger als 2 Gramm.

Bei den aufwendig hergestellten Seekabeln machen die Kosten für die Lichtwellenleiter nur einen kleinen Teil der Gesamtkosten aus. Wenn durch geringere Dämpfung der Lichtwellenleiter Repeater und Verstärker eingespart oder völlig vermieden werden können, ergeben sich daraus trotz erhöhter Faserkosten beim Einsatz in langen Seekabelstrecken oder auch bei Fernkabeln über Land insgesamt wesentlich geringere Kosten bei erhöhter Übertragungsqualität und verringerter Reparaturhäufigkeit.

Vom Ersatz der natürlichen Isotopenverteilung der Dotierstoffe durch schwerere Isotope sind nur geringfügige Veränderungen der Infrarotabsorption zu erwarten. Bei Fluor existiert nur ein stabiles Isotop. Die Massenzahl aller Germaniumisotope liegt weit über der Massenzahl von Silizium und Sauerstoff. Außerdem wird in Standard-Einmodenfasern, dem in der Nachrichtentechnik am häufigsten eingesetzten Fasertyp, das Kernmaterial nur mit etwa 5% GeO₂ dotiert. Bei höheren Dotierungen, wie beispielsweise in dipersionsverschobenen Einmodenfasern, kann dagegen eine kleine Verschiebung der Infrarotabsorption durch den Einsatz von ⁷⁶Ge im Verhältnis zum Glas, das mit natürlichem Ge-Isotopengemisch dotiert ist, erreicht werden.

Wie bereits erwähnt, ist der Einsatz in der Nachrichtentechnik nicht das einzige Anwendungsgebiet für Quarzglasfasern aus schweren Isotopen mit einer in den langwelligen Spektralbereich verschobenen Infrarotabsorption, sondern wichtige Einsatzgebiete sind zum Beispiel auch die industrielle und die medizinische Anwendung mit Infrarotlasern.

Die Lichtabsorption, zum Beispiel im Gewebe oder im Blut, ist sowohl im UV-Bereich, hervorgerufen durch Protein- und Wasserabsorption, als auch im Infrarotbereich, durch Wasserabsorption, besonders hoch. Die Eindringtiefe für UV-Laserlicht als auch für Licht eines CO₂-Lasers (10,6 µm) und des Er:YAG (bei 2,94 µm) und Er:YSGG (bei 2,79 µm) liegt im Bereich von 1 bis 20 µm. Aufgrund dieser kurzen Strecke, auf der die absorbierte Energie in andere Formen umgewandelt wird, sind vor allem die Er-Laser als sehr leistungsfähige und durchentwickelte Strahlungsquellen für medizinische Anwendungen von Interesse. In der Medizin werden etwa 2 Meter lange Lichtwellenleiter benötigt, deren Gesamttransmission nicht wesentlich unter 50% liegen sollte, das heißt die gewünschte Dämpfung liegt in der Größenordnung von höchstens 3 dB.

Es ist auch bekannt, daß von Lichtleitern aus den verschiedenen Materialien, wie zum Beispiel Chalogeniden, Halogeniden, Saphir, Hohlleitern, Flüssigkeitslichtleitern, keiner an die Qualitäten von Quarzglasfasern herankommt. Jedoch besteht ein großer Nachteil von Standard-Quarzglas darin, daß die Dämpfung bei Er-Laserwellenlängen so hoch ist, daß eine Anwendung bisher auf sehr kurze Faserabschnitte beschränkt war.

Es hat sich nun herausgestellt, daß eine Quarzglasfaser bei 2,94 µm ein Dämpfungsmaß von 12 dB/m aufweist, das heißt nach 2 Metern Faserlänge treten am Faserende weniger als 1% der eingekoppelten Lichtleistung aus. Wird dagegen ein Quarzglas aus ³⁰Si¹⁶O₂ eingesetzt, dann verschiebt sich in diesem Bereich, der bezüglich der logarithmisch dargestellten Dämpfung in der Mitte zwischen dem Absorptionsminimum und -maximum liegt, die Absorptionskante um ca. 0,3 µm. Dadurch verringert sich die Infrarotabsorption bei 2,94 µm auf etwa 1,8 dB/m. Dieser Wert ist zwar wesentlich höher als das vorher beschriebene minimale Dämpfungsmaß, aber für die Anwendungen in diesem Wellenlängenbereich völlig ausreichend. Am Ende einer 2 m langen Glasfaser treten jetzt noch ca. 40% der eingekoppelten Strahlungsleistung aus. Dieser Transmissionswert liegt in der obengenannten Größenordnung von ca. 50%. Andererseits werden die anderen vorteilhaften Eigenschaften von Quarzglas und Quarzglasfasern nicht verändert. Damit sind neue Quarzglasfaser-Übertragungssysteme in der Medizintechnik bei 2,94 µm realisierbar und zwar in Verbindung mit kostengünstigen Er-Lasern.

Außerdem kann die übertragene Leistungsdichte bzw. Leistung aufgrund der geringeren Absorption wesentlich gesteigert werden, und zwar auf Werte, die bei den bisher bekannten Fasern zu einer starken Erwärmung und Zerstörung führen. Dadurch erschließen sich auch neue Einsatzgebiete in der Industrie, insbesondere in der Materialbearbeitung.

Auch für diese zusätzlichen Anwendungen ist der Materialeinsatz von (schwerem) Silizium-Dioxid (³⁰Si¹⁶O₂) gering. Obwohl die Faser wesentlich dicker sind, und zwar mit typischen Kerndurchmessern von 200 bis 600 µm und einem typischen Mantel-Kern-Verhältnis von 1,1 bis 1,4, wird wegen der wesentlich kürzeren Faserlänge von etwa 2 m nur Isotopen-Material im Gramm-Bereich benötigt. Eine Faser mit einem Kerndurchmesser von 200 µm und einem Manteldurchmesser von 240 µm wiegt nur ca. 0,2 Gramm.

## Patentansprüche

1. Lichtwellenleiter aus Quarzglas, **dadurch gekennzeichnet,**
**daß** das Glasmaterial reines oder dotiertes Quarzglas ist und aus Atomen mit Massenzahlen aufgebaut ist, die größer als die Massenzahlen der natürlichen Isotopenverteilungen sind.

2. Lichtwellenleiter nach Patentanspruch 1, **dadurch gekennzeichnet,**
**daß** die im Quarzglas bzw. dotiertem Glas vorhandenen Siliziumatome überwiegend oder vollständig die Massenzahlen 29 und/oder 30 aufweisen.

3. Lichtwellenleiter nach einem der Patentansprüche 1 oder 2, **dadurch gekennzeichnet,**
**daß** der im Quarzglas vorhandene Sauerstoff überwiegend oder vollständig aus Isotopen mit Massenzahlen von 17 und/oder 18 besteht.

4. Lichtwellenleiter nach Patentanspruch 1, **dadurch gekennzeichnet,**
**daß** die im Quarzglas vorhandenen Siliziumatome überwiegend oder vollständig die Massenzahlen 29 und/oder 30 haben und die vorhandenen Sauerstoffatome überwiegend oder vollständig die Massenzahlen 17 und/oder 18.

5. Lichtwellenleiter aus dotiertem Quarzglas nach einem der Patentansprüche 1 bis 4, **dadurch gekennzeichnet,**
**daß** das Quarzglas vorzugsweise mit Atomen des Isotops ⁷⁶Ge dotiert ist.

6. Lichtwellenleiter auf Quarzglasbasis nach dem Oberbegriff des Patentanspruchs 1, **dadurch gekennzeichnet,**
**daß** das Glas aus Atomen mit höheren Massenzahlen als durch die natürliche Isotopenverteilung vorgegeben aufgebaut ist, das insbesondere aus Isotopen ³⁰Si und/oder ¹⁸O und/oder ⁷⁶Ge mit einer Dämpfung unter 0,15 dB/km realisiert ist.

7. Lichtwellenleiter nach einem der Patentansprüche 1 bis 6, **dadurch gekennzeichnet,**
**daß** die Lichtwellenleiter im Einkoppelbereich einen konischen Verlauf des Faserdurchmessers zur Verringerung der Leistungsdichte auf der Einkoppelfläche aufweisen.

8. Lichtwellenleiter nach einem der Patentansprüche 1 bis 7, **dadurch gekennzeichnet,**
**daß** er zur Übertragung von hochenergetischem, gepulstem oder kontinuierlichem Laserlicht im Wellenlängenbereich von 2,0 bis 3,0 µm einsetzbar ist und
**daß** der Lichtwellenleiter zur Übertragung von Erbium-Laserlicht der Wellenlänge 2,79 und 2,94 µm einsetzbar ist.

9. Lichtwellenleiter nach einem der Patentansprüche 1 bis 8, **dadurch gekennzeichnet,**
**daß** sie sowohl für Seekabel, Fernleitungen als auch für Kurzstreckenleiter, zum Beispiel in der Medizintechnik oder in der Materialbearbeitung einsetzbar ausgeführt sind.

10. Lichtwellenleiter nach einem der Patentansprüche 1 bis 9, **dadurch gekennzeichnet,**
**daß** zur Energieübertragung mittels Infrarotstrahlung Lichtwellenleiter mit einer Dotierung verwendet werden, deren Isotopenverteilung von der üblichen abweicht.

## Claims

1. Optical waveguide of quartz glass, **characterized in that**
the glass material is pure or doped quartz glass and is made of atoms with mass numbers which are greater than the mass numbers of the natural isotopic distributions.

2. Optical waveguide according to claim 1, **characterized in that**
the silicon atoms in the quartz glass or doped glass have predominantly or entirely the mass numbers 29 and/or 30.

3. Optical waveguide according to any one of claim 1 or 2, **characterized in that**
the oxygen in the quartz glass consists predominantly or entirely of isotopes with mass numbers of 17 and/or 18.

4. Optical waveguide according to claim 1, **characterized in that**
the silicon atoms in the quartz glass have predominantly or entirely the mass numbers 29 and/or 30 and the oxygen atoms have predominantly or entirely the mass numbers 17 and/or 18.

5. Optical waveguide of doped quartz glass according to any one of claims 1 to 4, **characterized in that**
the quartz glass is doped preferably with atoms of the isotope ⁷⁶Ge.

6. Optical waveguide based on quartz glass according to the preamble of claim 1, **characterized in that**
the glass is made of atoms with mass numbers higher than the ones given by the natural isotopic distribution, the glass consisting in particular of isotopes ³⁰Si and/or ¹⁸O and/or ⁷⁶Ge with an attenuation less than 0.15 dB/km.

7. Optical waveguide according to any one of claims 1 to 6, **characterized in that**
the optical waveguides have in the incoupling region a conical profile of the fibre diameter in order to reduce the power density on the incoupling surface.

8. Optical waveguide according to any one of claims 1 to 7, **characterized in that**
the optical waveguide can be used to transmit high-energy, pulsed or continuous laser light in the wavelength range between 2.0 and 3.0 µm and
the optical waveguide can be used to transmit erbium laser light of wavelength 2.79 and 2.94 µm.

9. Optical waveguide according to any one of claims 1 to 8, **characterized in that**
the optical waveguide can be used both for submarine cables, trunk lines and also for short-distance waveguides, for example in medical technology or in the machining of materials.

10. Optical waveguide according to any one of claims 1 to 9, **characterized in that**
used for energy transmission by means of infrared radiation are doped optical waveguides whose isotopic distribution differs from the usual one.

## Revendications

1. Guide d'onde optique en verre de quartz, **caractérisé en ce que**
le verre est du verre de quartz pur ou doté, constitué d'atomes dont les nombres de masse sont supérieurs aux nombres de masse des dispositions isotopiques naturelles.

2. Guide d'onde optique selon la revendication 1, **caractérisé en ce que**
les atomes de silicium présents dans le verre de quartz ou le verre doté présentent principalement ou exclusivement les nombres de masse 29 et/ou 30.

3. Guide d'ondes optique selon les revendications 1 ou 2, **caractérisé en ce que**
l'oxygène présent dans le verre de quartz est principalement ou exclusivement constitué d'isotopes ayant des nombres de masse de 17 et/ou 18.

4. Guide d'onde optique selon la revendication 1, **caractérisé en ce que**
les atomes de silicium présents dans le verre de quartz présentent principalement ou exclusivement les nombres de masse 29 et/ou 30 et que les atomes d'oxygène présentent principalement ou exclusivement les nombres de masse de 17 et/ou 18.

5. Guide d'onde optique en verre de quartz doté selon l'une des revendications 1 à 4, **caractérisé en ce que**
le verre de quartz est de préférence doté d'atomes de l'isotope ⁷⁶Ge.

6. Guide d'onde optique à base de verre de quartz selon la partie introductive de la revendication 1, **caractérisé en ce que**
le verre est constitué d'atomes dont le nombre de masse est supérieur à la disposition isotopique naturelle et réalisé en particulier à partir d'isotopes ³⁰SI et/ou ¹⁸O et/ou ⁷⁶Ge avec une atténuation inférieure à 0,15 dB/km.

7. Guide d'onde optique selon l'une des revendications 1 à 6, **caractérisé en ce que**
les guides d'onde optiques présentent au niveau de la zone de couplage une contexture conique du diamètre des fibres, afin de réduire la densité de puissance sur la surface de couplage.

8. Guide d'onde optique selon l'une des revendications 1 à 7, **caractérisé en ce que**
ce guide d'onde optique peut être utilisé pour la transmission impulsionnelle ou continue de lumière laser à haute énergie dans la gamme de longueurs d'ondes de 2,0 à 3,0 µm et que
ce guide d'onde peut être utilisé pour la transmission de lumière de laser erbium de longueurs d'onde de 2,79 et 2,94 µm.

9. Guides d'onde optiques selon l'une des revendications 1 à 8, **caractérisés en ce que**
ces guides d'onde optiques sont réalisés de manière à pouvoir être utilisés aussi bien pour les câbles sous-marins et les circuits longue distance que pour les conducteurs courte distance, par exemple dans les techniques médicales ou le traitement de matériaux.

10. Guides d'onde optiques selon l'une des revendications 1 à 9, **caractérisés en ce que**
pour la transmission d'énergie par rayons infrarouges, on utilise des guides d'ondes optiques dotés dont la disposition isotopique est différente de la disposition habituelle.
